# EUROPEAN PATENT APPLICATION

(11) **EP 4 567 079 A1**
(43) Date of publication of application: **11.06.2025**
(21) Application number: 23850148.0
(22) Date of filing: 03.08.2023
(51) Int. Cl.: C09D 11/037, B01J 37/02, B01J 37/08, C01B 32/949, B01J 27/22, C25B 11/052, C25B 11/081, C25B 11/091

(54) **MOLYBDENUM CARBIDE, COMPOSITE, CATALYST INK, PRODUCTION METHOD FOR MOLYBDENUM CARBIDE, AND PRODUCTION METHOD FOR COMPOSITE**

(30) Priority: 05.08.2022 JP 2022125418
(71) Applicant: DIC Corporation, Tokyo 174-8520 (JP)
(72) Inventor: YUAN Guohao, Sakura-shi, Chiba 285-8668 (JP); OMICHI Koji, Sakura-shi, Chiba 285-8668 (JP); YOSHIMURA Takumi, Sakura-shi, Chiba 285-8668 (JP); TANGE Mutsuko, Sakura-shi, Chiba 285-8668 (JP); UOTA Masafumi, Sakura-shi, Chiba 285-8668 (JP); TABUCHI Minoru, Sakura-shi, Chiba 285-8668 (JP); YUAN Jianjun, Sakura-shi, Chiba 285-8668 (JP)
(74) Representative: TBK
(86) International application number: PCT/JP2023/028443
(87) International publication number: WO 2024/029595

(57) **Abstract**

Molybdenum carbide includes a Mo₂C crystal structure, in which a content of carbon with respect to a total mass (100 mass%) of the molybdenum carbide is 6% or more.

## Description

### Technical Field

The present invention relates to molybdenum carbide, a composite product, a catalyst ink, a method for producing molybdenum carbide, and a method for producing a composite product.

The present application claims priority based on Japanese Patent Application No. 2022-125418, filed on August 5, 2022, the content of which is incorporated herein.

### Background Art

Water electrolysis technology has been attracting attention as the technology that produces hydrogen from water using electricity from renewable energy sources, aiming to solve environmental problems and energy resource problems.

Molybdenum compounds represented by molybdenum carbide (Mo₂C) have been expected as materials having high catalytic activity despite low price and abundant resource amount.

For example, as electrodes for hydrogen evolution, PTL 1 has described electrodes for hydrogen evolution including a metal (A) in which Volmer reaction occurs at least on the metal surface and a metal (B) in which Heyrovsky reaction or Tafel reaction occurs on the metal surface. PTL 2 has described that the combination of the metal (A) and the metal (B) may be a combination of at least one or more metals selected from the group consisting of molybdenum carbide, molybdenum boride, molybdenum oxide, nickel molybdate, molybdenum sulfide, tungsten carbide, tungsten boride, and tungsten oxide and at least one or more metals selected from the group consisting of nickel and cobalt.

Various methods for producing molybdenum carbide have been developed. For example, PTL 2 has described a method for reacting a compound of a heavy metal such as Mo in a gaseous state with a reactive carbon having a specific surface area of 200 m²/g or more at a temperature of 900°C to 1,400°C.

### Citation List

### Patent Literature

PTL 1: Japanese Unexamined Patent Application Publication No. 2001-234380
PTL 2: Japanese Unexamined Patent Application Publication (Translation of PCT Application) No. H3-501721

### Summary of Invention

### Technical Problem

However, the method described in PTL 2 has had difficulty for controlling the particle structure and the composition of molybdenum carbide. Therefore, there has been room for improving the catalytic performance and the electric conductivity of molybdenum carbide.

In addition, the method described in PTL 2 has required severe reaction conditions due to a high-temperature gas-phase reaction.

The present invention has been made in view of the above circumstances and an object of the present invention is to provide molybdenum carbide having a desired particle structure and a composition, a catalyst ink including the molybdenum carbide, a composite product of the molybdenum carbide and noble metal particles, transition metals, or transition metal compounds, a catalyst ink including the composite product, a method for producing molybdenum carbide, and a method for producing a composite product. Solution to Problem

The present invention includes the following aspects.
(1) Molybdenum carbide including a Mo₂C crystal structure, in which a content of carbon with respect to a total mass (100 mass%) of the molybdenum carbide is 6% or more.
(2) The molybdenum carbide according to (1), in which a graphite band G and a diamond band D derived from carbon measured by Raman spectroscopy are present.
(3) The molybdenum carbide according to (2), in which a ratio (G/D) of the graphite band G to the diamond band D derived from carbon is 0.75 or more.
(4) The molybdenum carbide according to any one of (1) to (3), in which a specific surface area measured by a BET method is 10 m²/g to 2,000 m²/g.
(5) The molybdenum carbide according to any one of (1) to (4), in which a median diameter D₅₀ calculated by being calculated by a dynamic light scattering method is 1,000 nm or less.
(6) The molybdenum carbide according to any one of (1) to (5), in which an average crystallite size determined from a peak at 2θ = 39.4 ± 0.5° of a profile obtained by X-ray diffraction measurement is 50 nm or less.
(7) A catalyst ink including the molybdenum carbide according to any one of (1) to (6) and a solvent.
(8) A composite product of noble metal particles having an average particle diameter of 20 nm or less and the molybdenum carbide according to any one of (1) to (6).
(9) The composite product according to (8), in which the noble metal particles are palladium particles.
(10) The composite product according to (9), in which the palladium particles include aggregates of palladium atoms without having a crystal structure.
(11) A catalyst ink including the composite product according to any one of (8) to (10) and a solvent.
(12) A composite product of at least one transition metal spices selected from the group consisting of transition metals and transition metal compounds and the molybdenum carbide according any one of (1) to (6).
(13) The composite product according to (12) with the molybdenum carbide, in which the transition metal spices is at least one transition metal spices selected from the group consisting of nickel and nickel compounds.
(14) A catalyst ink including the composite product according to (12) or (13) and a solvent.
(15) A method for producing molybdenum carbide, the method including a step of calcining molybdenum trioxide containing an α crystal having an average crystallite size of 50 nm or less and carbon in the presence of at least one inorganic compound selected from the group consisting of inorganic salts and inorganic hydroxides.
(16) The method for producing molybdenum carbide according (15), in which the inorganic compound is at least one compound selected from the group consisting of sodium compounds and potassium compounds.
(17) A method for producing a composite product, the method including a step of mixing molybdenum carbide and a noble metal solution, in which the molybdenum carbide has a Mo₂C crystal structure and a content of carbon with respect to a total mass (100 mass%) of molybdenum carbide is 6% or more.
(18) A method for producing a composite product, the method including a step of mixing molybdenum carbide and a transition metal compound solution, in which the molybdenum carbide has a Mo₂C crystal structure and a content of carbon with respect to a total mass (100 mass%) of molybdenum carbide is 6% or more.

### Advantageous Effects of Invention

According to the present invention, molybdenum carbide having a desired particle structure and a composition, a catalyst ink including the molybdenum carbide, a composite product of the molybdenum carbide and noble metal particles, transition metals, or transition metal compounds, a catalyst ink including the composite product, a method for producing molybdenum carbide, and a method for producing a composite product can be provided.

### Brief Description of Drawings

FIG. 1 is a schematic view illustrating one example of an apparatus used for producing molybdenum trioxide particles serving as a raw material of molybdenum disulfide particles related to a composite product according to embodiments.
FIG. 2 is a chart illustrating X ray diffraction (XRD) profiles of each of particles obtained in Examples 1 to 3 in an overlapped manner.
FIG. 3 illustrates transmission electron microscope(TEM, JEM-1400, manufactured by JEOL Ltd.) images of the particles obtained in Examples 1 to 3.
FIG. 4 illustrates observed images of each of the particles in Example 1 obtained by using a high-resolution transmission electron microscope (HRTEM, JEM-ARM300F manufactured by JEOL Ltd.).
FIG. 5 is a chart illustrating X ray diffraction (XRD) profiles of each of particles obtained in Examples 4 to 6, Comparative Example 1, and Comparative Example 4 in an overlapped manner.
FIG. 6 illustrates images of the particles obtained in Examples 4 and 6 obtained by a transmission electron microscope(TEM, JEM-1400, manufactured by JEOL Ltd.).
FIG. 7 illustrates observed images of the particles in Example 4 obtained by using a high-resolution transmission electron microscope (HRTEM, JEM-ARM300F manufactured by JEOL Ltd.) .
FIG. 8 is a HAADF-STEM image (transmission electron image, JEM-ARM300F manufactured by JEOL Ltd.) of the particles in Example 4.
FIG. 9 is a SEI image (secondary electron image, JEM-ARM300F manufactured by JEOL Ltd.) of the particles in Example 4.
FIG. 10 is a chart illustrating X ray diffraction (XRD) profiles of the particles obtained in Example 7 and Comparative Example 6 in an overlapped manner.
FIG. 11 illustrates images of the particles obtained in Example 7 obtained by a high-resolution transmission electron microscope(HRTEM, JEM-ARM300F, manufactured by JEOL Ltd.) .

### Description of Embodiments

### <Molybdenum Carbide>

The molybdenum carbide according to the present embodiment contains the crystal structure of a Mo₂C crystal structure, in which a content of carbon with respect to a total mass (100 mass%) of the molybdenum carbide is 6% or more.

In the present embodiment, the presence of the Mo₂C crystal structure can be detected by the diffraction profile obtained from XRD analysis using molybdenum carbide as a sample. In the present embodiment, the Mo₂C crystal structure may be either an α-crystal or a β-crystal, and the α-crystal is preferable.

The molybdenum carbide according to the present embodiment has a carbon content of 6% or more with respect to the total mass of the molybdenum carbide (100 mass%), and the content is preferably 8% or more, more preferably 10% or more, and even more preferably 15% or more.

The molybdenum carbide having the carbon content of the lower limit value of the above range or more allows the electrical conductivity of molybdenum carbide to be easily improved.

In the molybdenum carbide according to the present embodiment, the upper limit value of the content of carbon with respect to the total mass of the molybdenum carbide (100 mass%) is not particularly limited, and is preferably 90% or less, more preferably 80% or less, and even more preferably 60% or less.

The molybdenum carbide having the carbon content of the upper limit value of the above range or less allows the electrical conductivity and the catalytic performance of the molybdenum carbide to be easily improved.

In the present embodiment, the compositional analysis of molybdenum carbide can be determined by acid decomposition under heated and sealed condition-ICP-AES (inductively coupled plasma atomic emission spectrometry) and the carbon content can be determined by CHN elemental analysis.

In the molybdenum carbide according to the present embodiment, a graphite band G and a diamond band D derived from carbon measured by Raman spectroscopic analysis are preferably present. Specifically, the molybdenum carbide according to the present embodiment is preferably a hybrid structure of crystalline Mo₂C and carbon. The state of presence of crystalline Mo₂C and carbon is not particularly limited. Examples of the state include a state where carbon is present on the surface of Mo₂C and a state where carbon domains scattered in a Mo₂C matrix.

In the present embodiment, in the molybdenum carbide, a ratio (G/D) of the graphite band G to the diamond band D is preferably 0.75 or more, more preferably 0.78 or more, and even more preferably 0.80 or more.

The molybdenum carbide having the G/D of the lower limit value of the above range or more allows defects derived from the diamond band D to be reduced and the conductivity and the catalytic performance of the molybdenum carbide to be easily improved.

In the present embodiment, the upper limit value of the G/D ratio is not particularly limited. The upper limit value is preferably 2.0 or less, more preferably 1.5 or less, and even more preferably 1.0 or less.

The molybdenum carbide having the G/D ratio of the upper limit value of the above range or less allows synergistic effect to be easily exhibited and the catalytic performance to be easily improved.

In the present embodiment, the specific surface area of the molybdenum carbide, which is measured by a BET method, is preferably 10 m²/g to 2,000 m²/g, more preferably 20 m²/g to 1,500 m²/g, and even more preferably 50 m²/g to 1,500 m²/g.

In the case where the molybdenum carbide is used as a catalyst, for example, the specific surface area measured by the BET method within the above preferable range allows an increase in the catalytically active sites and the mass transfer in the reaction system to be easily achieved, and thus the catalytic efficiency to be even more effectively improved.

As the above specific surface area, measurement is performed with a specific surface area meter (for example, BELSORP-mini, manufactured by MicrotracBEL Corp.) and the surface area per gram of a sample measured from the amount of adsorbed nitrogen gas by the BET method (Brunauer-Emmett-Teller method) is calculated as the specific surface area (m²/g).

In the present embodiment, the median diameter D₅₀ of the molybdenum carbide determined by a dynamic light scattering method is preferably 1,500 nm or less, more preferably 1,000 nm or less, and even more preferably 500 nm or less.

The molybdenum carbide having the median diameter D₅₀ of the upper limit value of the above preferable range or less allows the catalytic efficiency to be more effectively exhibited, for example, in the case where the molybdenum carbide is used as a catalyst.

As one example, the median diameter D₅₀ of the molybdenum carbide according to the embodiment determined by the dynamic light scattering method may be 20 nm or more or 40 nm or more.

As one example of the numerical value range of the value of the median diameter D₅₀ of the molybdenum carbide according to the embodiment determined by the dynamic light scattering method, the range may be 20 nm or more and 1,500 nm or less, 40 nm or more and 1,000 nm or less, or 40 nm or more and 500 nm or less.

The median diameter D₅₀ of the molybdenum carbide according to the embodiment calculated by the dynamic light scattering method can be obtained as a particle diameter at which the ratio of a volume integration percent is 50% in the particle size distribution measured in a wet manner using a dynamic light scattering particle size distribution analyzer (for example, Nanotrac Wave II manufactured by MicrotracBEL Corp.).

In the present embodiment, the average crystallite size of the molybdenum carbide determined from the peak at 2θ = 39.4 ± 0.5° in the profile obtained by X-ray diffraction measurement is preferably 50 nm or less, more preferably 45 nm or less, and even more preferably 40 nm or less.

The above average crystallite size is considered to reflect the particle size and the shape of the molybdenum carbide particles. The smaller the crystallite size, the more catalytically active sites such as interfaces and defects tend to increase, which is preferable.

As one example, the lower limit value of the average crystallite size of the molybdenum carbide determined from the peak of 2θ = 39.4° ± 0.5° obtained by X-ray diffraction measurement may be 1 nm or more, 3 nm or more, 4 nm or more, or 5 nm or more.

The average crystallite size of the molybdenum carbide according to the embodiment can be measured by the following measurement method.

### [Measurement of Crystallite Size]

The measurement is performed by using an X-ray diffraction apparatus (for example, SmartLab 9kW manufactured by Rigaku Corporation), using a scintillation counter as a detector, and using PDXL2 as analysis software. The measurement method is a 2θ/θ method. The average crystallite size of the particles is calculated from the full width at half maximum (FWHM) of the peak appearing at 2θ = 39.4 ± 0.5° using the Scherrer formula. As the measurement conditions, the scanning speed (2θ) is 2.0°/min, the scan range (2θ) is 10° to 70°, the step (2θ) is 0.02°, and the instrument standard width is determined to be zero.

The molybdenum carbide according to the present embodiment contains the crystal structure of a Mo₂C crystal structure, in which a content of carbon with respect to a total mass (100 mass%) of the molybdenum carbide is 6% or more. Therefore, the molybdenum carbide according to the present embodiment has a large specific surface area, has excellent conductivity and catalytic performance, and is particularly useful in water electrolysis catalyst applications.

### <Method for Producing Molybdenum Carbide>

The method for producing molybdenum carbide according to the present embodiment includes a step of calcining molybdenum trioxide containing an α crystal having an average crystallite size of 50 nm or less and carbon in the presence of at least one inorganic compound selected from the group consisting of inorganic salts and inorganic hydroxides.

As the at least one inorganic compound, alkali metal compounds are preferable, at least one compound selected from the group consisting of sodium compounds and potassium compounds is more preferable, and at least one compound selected from the group consisting of KCl, NaCl, and KOH is even more preferable

The amount of the at least one inorganic compound is not particularly limited and is preferably 5% to 1,000%, more preferably 10% to 500%, and even more preferably 20% to 200% with respect to the mass of molybdenum trioxide and carbon.

The amount of the at least one inorganic compound within the above preferable range allows the molybdenum carbide having high conductivity and catalytic activity to be easily formed.

In the present embodiment, the at least one inorganic compound functions as a flux and promotes the reaction between molybdenum trioxide and carbon. The flux method is characterized by being possible to synthesize inorganic compounds or to control the crystal structure and the composition thereof at a temperature comparatively lower than that of normal calcination.

In the production method according to the present embodiment, the calcining temperature is not particularly limited and is preferably 400°C to 1,500°C, more preferably 500°C to 1,000°C, and even more preferably 750°C to 880°C. The calcining temperature within the above preferable range allows the molybdenum carbide having high electrical conductivity and catalytic activity to be easily formed.

In the production method according to the present embodiment, the heating time is not particularity limited and may be 1 hour to 48 hours, 2 hours to 24 hours, or 4 hours to 12 hours as long as the reaction proceeds sufficiently.

The production method according to the present embodiment may include a step of washing the calcined product with water to remove the at least one inorganic compound after calcination of molybdenum trioxide and carbon.

In the production method according to the present embodiment, carbon is not particularly limited. Commercially available carbon particles such as carbon black and carbon nanotubes may be used.

In the production method according to the present embodiment, a molybdenum trioxide powder has a median diameter D₅₀ of the primary particles determined by the dynamic light scattering method of preferably 10 nm or more and 2,000 nm or less, more preferably 10 nm or more and 500 nm or less, and even more preferably 10 nm or more and 200 nm or less.

The median diameter D₅₀ of the primary particles within the above preferable range allows the reactivity of molybdenum trioxide powder with carbon to tend to be more excellent. The median diameter D₅₀ of the primary particles of molybdenum trioxide powder is calculated, for example, from the volume-based cumulative particle size distribution measured using a dynamic light scattering particle size analyzer.

In the present embodiment, the average particle diameter of the primary particles of the molybdenum trioxide powder refers to an average value of primary particle diameters of 50 primary particles randomly selected when the molybdenum trioxide powder is photographed with a transmission electron microscope (TEM) or a scanning electron microscope (SEM), the major axis (the Feret diameter of the longest portion observed) and the minor axis (the short Feret diameter in a direction perpendicular to the Feret diameter of the longest portion) of the minimum unit particles (that is, the primary particles) constituting aggregates on a two-dimensional image are measured, and an average value thereof is defined as the primary particle diameter.

In the present embodiment, the ratio of MoO₃ content measured by X-ray fluorescence (XRF) with respect to the total mass of the molybdenum trioxide powder is preferably 99.5 mass% or more, more preferably 99.7 mass% or more, and even more preferably 99.9 mass% or more with respect to the total detected peak intensity.

The ratio of the MoO₃ content within the above preferable range allows the molybdenum carbide having high purity and excellent storage stability with no risk of generating impurity-derived carbides by carbonization reaction of the molybdenum trioxide powder to be easily obtained.

In the present embodiment, the specific surface area of the molybdenum trioxide powder is preferably 10 m²/g or more, more preferably 20 m²/g or more, and even more preferably 30 m²/g or more from the viewpoint of excellent reactivity with carbon. In the molybdenum trioxide powder, the specific surface area is preferably 100 m²/g and may be 90 m²/g or 80 m²/g from the viewpoint of facilitation in production.

In the present embodiment, the average crystallite size of the α crystal contained in the crystal structure of molybdenum trioxide is 50 nm or less, preferably 5 nm or more and 50 nm or less, more preferably 5 nm or more and 45 nm or less, even more preferably 10 nm or more and 40 nm or less, and particularly preferably 10 nm or more and 35 nm or less.

The average crystallite size of the α crystal within the above range allows the reactivity of molybdenum trioxide powder with carbon to tend to be more excellent.

In the present embodiment, the crystal structure of molybdenum trioxide may further contain the β crystal having an average crystallite size of 50 nm or less. The reactivity of molybdenum trioxide powder with carbon tends to be more excellent when the crystal structure of molybdenum trioxide contains the α crystal and the β crystal.

In the present embodiment, the average crystallite size of the β crystal contained in the crystal structure of molybdenum trioxide is preferably 5 nm or more and 50 nm or less, more preferably 5 nm or more and 45 nm or less, even more preferably 10 nm or more and 40 nm or less, and particularly preferably 10 nm or more and 30 nm or less.

The average crystallite size of the β crystal within the above preferable range allows the reactivity of molybdenum trioxide powder with carbon to tend to be more excellent.

In the present embodiment, the α crystal structure of molybdenum trioxide can be observed by the presence of a peak (in the vicinity of 2θ: 27.32°, No. 166363 (inorganic crystal structure database, ICSD)) of the plane (021) of the α crystal of MoO₃ in a profile obtained by the powder X-ray diffraction (XRD) using the Cu-Kα rays as the X-ray source. The β crystal structure can be observed by the presence of a peak (in the vicinity of 2θ: 23.01°, No. 86426 (inorganic crystal structure database, ICSD)) attributed to the plane (011) of the β crystal of MoO₃ in a profile obtained by the powder X-ray diffraction (XRD) using the Cu-Kα rays as the X-ray source.

In the present embodiment, the molybdenum trioxide powder preferably has a ratio (β (011)/α (021)) of intensity of a peak attributed to the plane (011) of the β crystal of MoO₃ to intensity of a peak attributed to the plane (021) of the α crystal of MoO₃ of 0.1 or more, more preferably 0.2 or more, and even more preferably 0.4 or more, in the profile obtained by the powder X-ray diffraction (XRD) using the Cu-Kα rays as the X-ray source.

In the present embodiment, the molybdenum trioxide particles preferably have a ratio (β (011)/α (021)) of 10.0 or less.

From the peak intensity attributed to the plane (011) of the β crystal of MoO₃ and the intensity of the peak attributed to the plane (021) of the α crystal of MoO₃, each maximum peak intensity is read to obtain the ratio (β (011)/α (021)).

In the present embodiment, in the molybdenum trioxide powder, the ratio (β (011)/α (021)) is preferably 0.1 to 10.0, more preferably 0.2 to 10.0, and particularly preferably 0.4 to 10.0.

In the present embodiment, the ratio of the α crystal content of the molybdenum trioxide powder is not particularly limited, and may be 20% or more, 50% or more, 70% or more, 80% or more, or 100%.

In the mixture of the α crystal and the β crystal in MoO₃, the ratio of the α crystal content in MoO₃ can be determined from the obtained profile data by a RIR (reference intensity ratio) method. The ratio of the α crystal content in MoO₃ can be determined in accordance with the following formula (2) using the RIR value K_{A} of the α crystal in MoO₃, the integrated intensity I_{A} of the plane (021) (in the vicinity of 2θ: 27.32°, No. 166363 (inorganic crystal structure database, ICSD)) of the α crystal in MoO₃, the RIR value K_{B} of the β crystal in MoO₃, and the integrated intensity I_{B} attributed to the plane (011) (in the vicinity of 2θ: 23.01°, No. 86426 (inorganic crystal structure database, ICSD)) of the β crystal in MoO₃. Ratio of α crystal content in MoO3 (%) = (IA/KA)/((IA/KA) + (IB/KB)) × 100

Here, values described in the ICSD database can be used as the RIR values, and integrated X-ray powder diffraction software (PDXL2 manufactured by Rigaku Corporation) can be used for analysis.

### (Method for Producing Molybdenum Trioxide Powder)

The molybdenum trioxide powder can be produced by vaporizing a molybdenum oxide precursor compound to form molybdenum trioxide vapor and cooling the molybdenum trioxide vapor.

The method for producing a molybdenum trioxide powder includes calcining a raw material mixture containing a molybdenum oxide precursor compound and a metal compound other than the molybdenum oxide precursor compound to vaporize the molybdenum oxide precursor compound so as to form molybdenum trioxide vapor. The ratio of the metal compound to 100% by mass of the raw material mixture is preferably 70% by mass or less in terms of oxide.

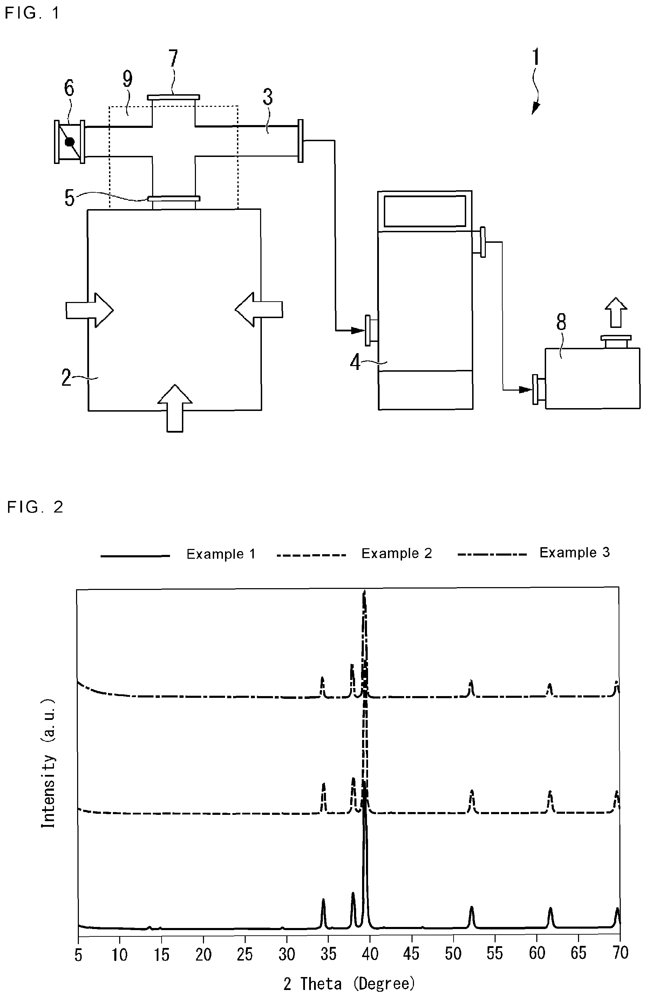

The method for producing a molybdenum trioxide powder can be suitably carried out by using a production apparatus 1 shown in FIG. 1.

FIG. 1 is a schematic view of an example of an apparatus used for producing the molybdenum trioxide powder. The production apparatus 1 includes a calcining furnace 2 for calcining a molybdenum oxide precursor compound or the raw material mixture to vaporize the molybdenum oxide precursor compound, a cross-shaped cooling pipe 3 connected to the calcining furnace 2 for powdering the molybdenum trioxide vapor vaporized by the calcining, and a collection device 4 as a collection unit for collecting the molybdenum trioxide powder aggregated in a powder form in the cooling pipe 3. At this time, the calcining furnace 2 and the cooling pipe 3 are connected to each other via a discharge port 5. Further, in the cooling pipe 3, an opening degree adjustment damper 6 is disposed at an outside air intake port (not shown) at a left end portion, and an observation window 7 is disposed at an upper end portion. An air exhauster 8, which is a first air blowing unit, is connected to the collection device 4. When the air exhauster 8 exhausts air, the collection device 4 and the cooling pipe 3 suction the air, and the outside air is blown into the cooling pipe 3 from the opening degree adjustment damper 6 of the cooling pipe 3. That is, the air exhauster 8 passively blows air to the cooling pipe 3 by exhibiting a suction function. In addition, the production apparatus 1 may include an external cooling device 9, which makes it possible to freely control cooling conditions for the molybdenum trioxide vapor generated from the calcining furnace 2.

The opening degree adjustment damper 6 takes in air from the outside air intake port and the molybdenum trioxide vapor vaporized in the calcining furnace 2 is cooled in an air atmosphere to obtain a molybdenum trioxide powder, whereby the ratio (I/II) can be made more than 1.1, and the β crystal structure of MoO₃ can be easily obtained in the molybdenum trioxide powder. In contrast, when the molybdenum trioxide vapor is cooled in a state where an oxygen concentration in a nitrogen atmosphere is low, for example, when the molybdenum trioxide vapor is cooled using liquid nitrogen, the oxygen defect density is likely to increase and the ratio (I/II) is likely to decrease.

The molybdenum oxide precursor compound is not particularly limited as long as it is a precursor compound for forming the molybdenum trioxide powder made of an aggregate of the primary particles containing molybdenum trioxide having a β crystal structure.

The molybdenum oxide precursor compound is not particularly limited as long as it forms molybdenum trioxide vapor by being calcined, and examples thereof include metal molybdenum, molybdenum trioxide, molybdenum dioxide, molybdenum sulfide, ammonium molybdate, phosphomolybdic acid (H₃PMo₁₂O₄₀), silicomolybdic acid (H₄SiMo₁₂O₄₀), aluminum molybdate, silicon molybdate, magnesium molybdate (MgMoₙO₃ₙ₊₁ (n = 1 to 3)), sodium molybdate (Na₂MoₙO₃ₙ₊₁ (n = 1 to 3)), titanium molybdate, ferric molybdate, potassium molybdate (K₂MoₙO₃ₙ₊₁ (n = 1 to 3)), zinc molybdate, boron molybdate, lithium molybdate (Li₂MoₙO₃ₙ₊₁ (n = 1 to 3)), cobalt molybdate, nickel molybdate, manganese molybdate, chromium molybdate, cesium molybdate, barium molybdate, strontium molybdate, yttrium molybdate, zirconium molybdate, and copper molybdate. These molybdenum oxide precursor compounds may be used alone or in combination of two or more thereof. The form of the molybdenum oxide precursor compound is not particularly limited, and for example, the molybdenum oxide precursor compound may be in a powder form such as molybdenum trioxide, or may be in a liquid form such as an aqueous solution of ammonium molybdate. The molybdenum oxide precursor compound is preferably in the powder form having good handling properties and good energy efficiency.

As the molybdenum oxide precursor compound, commercially available α-crystal molybdenum trioxide is preferably used. Further, when ammonium molybdate is used as the molybdenum oxide precursor compound, the ammonium molybdate is converted by calcining into molybdenum trioxide that is thermodynamically stable, and thus the molybdenum oxide precursor compound to be vaporized becomes molybdenum trioxide.

Among these molybdenum oxide precursor compounds, molybdenum trioxide is preferably contained from the viewpoint of easily controlling the purity of the obtained molybdenum trioxide powder, the average particle diameter of the primary particles, and the crystal structure.

The molybdenum trioxide vapor can also be formed by calcining a raw material mixture containing a molybdenum oxide precursor compound and a metal compound other than the molybdenum oxide precursor compound.

The metal compound other than the molybdenum oxide precursor compound is not particularly limited, and examples thereof include an aluminum compound, a silicon compound, a titanium compound, a magnesium compound, a sodium compound, a potassium compound, a zirconium compound, an yttrium compound, a zinc compound, a copper compound, and an iron compound. Among these, it is preferable to use an aluminum compound, a silicon compound, a titanium compound, or a magnesium compound.

The molybdenum oxide precursor compound and the metal compound other than the molybdenum oxide precursor compound may form an intermediate, but even in this case, the intermediate is decomposed by calcining, and molybdenum trioxide can be vaporized in a thermodynamically stable form.

Among these compounds used as the metal compound other than the molybdenum oxide precursor compound, an aluminum compound is preferably used to prevent damage to a calcining furnace, and the metal compound other than the molybdenum oxide precursor compound may not be used to improve the purity of the molybdenum trioxide powder.

Examples of the aluminum compound include aluminum chloride, aluminum sulfate, basic aluminum acetate, aluminum hydroxide, boehmite, pseudo-boehmite, transition aluminum oxides (γ-aluminum oxide, δ-aluminum oxide, θ-aluminum oxide, etc.), α-aluminum oxide, and a mixed aluminum oxide having two or more crystal phases.

When a raw material mixture containing a molybdenum oxide precursor compound and a metal compound other than the molybdenum oxide precursor compound is calcined, the content of the molybdenum oxide precursor compound is preferably 40% by mass to 100% by mass, and may be 45% by mass to 100% by mass or 50% by mass to 100% by mass with respect to 100% by mass of the raw material mixture.

The calcining temperature varies depending on the molybdenum oxide precursor compound, the metal compound, and the like to be used, and the desired molybdenum trioxide powder, and is usually preferably a temperature at which the intermediate can be decomposed. For example, since aluminum molybdate can be formed as an intermediate when a molybdenum compound is used as the molybdenum oxide precursor compound and an aluminum compound is used as the metal compound, the calcining temperature is preferably 500°C to 1500°C, more preferably 600°C to 1550°C, and still more preferably 700°C to 1600°C.

The calcining time is also not particularly limited, and may be, for example, 1 minute to 30 hours, 10 minutes to 25 hours, or 100 minutes to 20 hours.

The temperature rising rate varies depending on the molybdenum oxide precursor compound and the metal compound to be used, and the properties of the desired molybdenum trioxide powder, and is preferably 0.1°C/min or more and 100°C/min or less, more preferably 1°C/min or more and 50°C/minor less, and even more preferably 2°C/min or more and 10°C/min or less from the viewpoint of production efficiency.

The internal pressure in the calcining furnace is not particularly limited, and may be a positive pressure or a reduced pressure, but from the viewpoint of suitably discharging the molybdenum oxide precursor compound from the calcining furnace to the cooling pipe, the calcining is preferably performed under a reduced pressure. Specifically, the degree of pressure reduction is preferably -5,000 Pa to -10 Pa, more preferably -2,000 Pa to -20 Pa, and still more preferably -1,000 Pa to -50 Pa. When the degree of pressure reduction is -5,000 Pa or more, high airtightness and mechanical strength of the calcining furnace are not excessively required, and production costs can be reduced, which is preferable. When the degree of pressure reduction is -10 Pa or less, clogging of the molybdenum oxide precursor compound at a discharge port of the calcining furnace can be prevented, which is preferable.

When a gas is blown into the calcining furnace during calcining, the temperature of the blown gas is preferably 5°C to 500°C, and more preferably 10°C to 100°C.

Further, the blowing speed of the gas is preferably 1 L/min ore more and 500 L/min or less, and more preferably 10 L/min or more and 200 L/min or less with respect to 100 L of an effective volume of the calcining furnace.

The temperature of the vaporized molybdenum trioxide vapor varies depending on the type of the molybdenum oxide precursor compound to be used, and is preferably 200°C to 2000°C, and more preferably 400°C to 1500°C. When the temperature of the vaporized molybdenum trioxide vapor is 2,000°C or lower, usually, the vapor tends to be easily turned into a powder by blowing outside air (0°C to 100°C) to the cooling pipe.

The discharge rate of the molybdenum trioxide vapor discharged from the calcining furnace can be controlled based on the amount of the molybdenum oxide precursor compound to be used, the amount of the metal compound to be used, the temperature of the calcining furnace, blowing of the gas into the calcining furnace, and the diameter of the discharge port of the calcining furnace. The discharge rate of the molybdenum trioxide vapor discharged from the calcining furnace to the cooling pipe varies depending on the cooling capacity of the cooling pipe, and is preferably 0.001 g/min or more and 100 g/min or less, and more preferably 0.1 g/min or more and 50 g/min or less.

Further, the content of the molybdenum trioxide vapor contained in the gas discharged from the calcining furnace is preferably 0.01 g/min or more and 1,000 mg/L or less, and more preferably 1 g/min or more and 500 mg/Lg/min or less.

Next, the molybdenum trioxide vapor is cooled to be powdered.

The molybdenum trioxide vapor is cooled by lowering the temperature of the cooling pipe. In this case, examples of a cooling method include cooling by blowing a gas into the cooling pipe as described above, cooling by a cooling mechanism included in the cooling pipe, and cooling by an external cooling device.

The molybdenum trioxide vapor is preferably cooled in an air atmosphere. When the molybdenum trioxide vapor is cooled in an air atmosphere to form a molybdenum trioxide powder, the ratio (I/II) can be made more than 1.1, and the β crystal structure of MoO₃ can be easily obtained in the molybdenum trioxide powder.

The cooling temperature (temperature of the cooling pipe) is not particularly limited, and is preferably -100°C to 600°C, and more preferably -50°C to 400°C.

The cooling rate of the molybdenum trioxide vapor is not particularly limited, and is preferably 100°C/s or more and 100,000°C/s or less, and more preferably 1,000°C/s or more and 50,000°C/s or less. As the cooling rate of the molybdenum trioxide vapor increases, a molybdenum trioxide powder having a small particle diameter and a large specific surface area tends to be obtained.

When the cooling method is cooling by blowing a gas into the cooling pipe, the temperature of the blown gas is preferably -100°C to 300°C, and more preferably -50°C to 100°C.

Further, the blowing speed of the gas is preferably 0.1 m³/min or more and 20 m³/min or less, and more preferably 1 m³/min or more and 10 m³/min or less. When the blowing speed of the gas is 0.1 m³/min or more, a high cooling rate can be achieved, and clogging in the cooling pipe can be prevented, which is preferable. In contrast, when the blowing speed of the gas is 20 m³/min or less, the first air blowing unit (such as an air exhauster) which is expensive is no longer needed, and production costs can be reduced, which is preferable.

The powder obtained by cooling the molybdenum trioxide vapor is transported to the collection device for collection.

In the method for producing a molybdenum trioxide powder, the powder obtained by cooling the molybdenum trioxide vapor may be calcined again at a temperature of 100°C to 320°C.

That is, the molybdenum trioxide powder obtained by the method for producing a molybdenum trioxide powder may be calcined again at a temperature of 100°C to 320°C. The calcining temperature in the re-calcining may be 120°C to 280°C or 140°C to 240°C. A calcining time in the re-calcining may be, for example, 1 min to 4 h, 10 min to 5 h, or 100 min to 6 h. However, a part of the β crystal structure of molybdenum trioxide disappears due to re-calcining , and when calcining is performed at a temperature of 350°C or higher for 4 hours, the β crystal structure of the molybdenum trioxide particles disappears, the ratio (β (011)/α (021)) is 0, and the reactivity with carbon is impaired.

According to the method for producing molybdenum carbide according to the present embodiment, the molybdenum carbide having the desired particle structure and composition can be obtained. Further, according to the method for producing molybdenum carbide according to the present embodiment, there are such advantage that mass production is possible, an apparatus having the risk caused by high pressure is not required, and a post-treatment process is not required.

### <First Catalyst Ink>

The catalyst ink according to the present embodiment (hereinafter also referred to as a "first catalyst ink") includes the molybdenum carbide according to the present embodiment and a solvent.

The solvents are not particularly limited. Examples of the solvent include alcohol solvents such as methanol and ethanol, or a mixture solvent of the alcohol solvents and water. Of these solvents, methanol and ethanol are particularly preferable as the solvents.

In the present embodiment, the first catalyst ink may include only one type of the solvent or two or more types thereof.

The first catalyst ink according to the present embodiment may further include a conductive material.

Examples of the conductive material include carbon and a metal that have high conductivity.

The first catalyst ink may include only one type of the conductive material or two or more types thereof.

Examples of the carbon include carbon black such as acetylene black, Cabot carbon black, and Ketjen Black, graphite, carbon fibers, and metal powders. Ketjen Black has a high specific surface area and conductivity, and is excellent from the viewpoint of suppressing aggregation of the molybdenum carbide.

Examples of the metal that is the conductive material include gold, silver, copper, palladium, aluminum, rhodium, molybdenum, tungsten, iron, nickel, cobalt, and indium.

The first catalyst ink according to the present embodiment may include only one type of the metal serving as the conductive material or two or more types thereof.

As the conductive material, for example, the first catalyst ink according to the present embodiment may include the carbon and no metal, may include the metal and no carbon, or may include both the metal and the carbon.

The first catalyst ink according to the present embodiment can be applied to, for example, a substrate for a working electrode to form a catalyst layer.

The first catalyst ink according to the present embodiment may further include polyelectrolyte.

As the polyelectrolyte, polyelectrolytes generally used in formation of a catalyst layer can be used. Specific examples thereof include a perfluorocarbon polymer having a sulfonic acid group (for example, Nafion (registered trademark)), a hydrocarbon-based polymer compound having a sulfonic acid group, a polymer compound doped with an inorganic acid such as phosphoric acid, organic/inorganic hybrid polymers partially substituted with proton-conducting functional groups, and a proton conductor in which a polymer matrix is impregnated with a phosphoric acid solution or a sulfuric acid solution.

### <Composite Product of Noble Metal Particles and Molybdenum Carbide>

The composite product according to the present embodiment (hereinafter also referred to as a "first composite product") is a composite product of noble metal particles having an average particle size of 20 nm or less and the molybdenum carbide according to the embodiment.

### (Noble Metal Particles)

In the present embodiment, the noble metal particles are not particularly limited. Gold, silver, platinum, palladium, rhodium, and iridium are preferable and palladium is more preferable.

In the present embodiment, the first composite product may contain only one type of the noble metal particles or two or more types thereof.

In the case where the noble metal is palladium, the palladium particles contained in the first composite product according to the embodiment are a particle structure product containing palladium and constitute the composite product of palladium and the molybdenum carbide by compositing with the molybdenum carbide particles.

The shape of the palladium particles is not particularly limited. Examples of the shape include a spherical shape and a hemispherical shape.

The contained form of the palladium particles in the first composite product according to the embodiment is not particularly limited. The palladium particles may be present on the surface of the molybdenum carbide particles or may be attached to the surface of the molybdenum carbide particles.

The number of the palladium particles present per 100 nm × 100 nm surface area of the surface of the molybdenum carbide particles may be, for example, 5 particles to 5,000 particles or 10 particles to 1,000 particles.

The average particle diameter of the palladium particles is 20 nm or less, or may be 15 nm or less or 10 nm or less.

As one example, the lower limit value of the average particle diameter of the palladium particles may be 0.5 nm or more, 0.7 nm or more, or 1 nm or more.

As one example of the numerical value range of the values of the average particle diameter of the palladium particles, the range may be 0.5 nm or more and 20 nm or less, 0.7 nm or more and 15 nm or less, or 1 nm or more and 10 nm or less.

As the average particle diameter of the palladium particles, the average value of measured maximum lengths in the distance between two points on the contour line of 50 randomly selected palladium particles, which are identified on the two-dimensional image obtained by photographing the first composite product according to the present embodiment with a transmission electron microscope (TEM) is adapted.

The palladium particles are aggregates of palladium (Pd) atoms and contain palladium. The contained form of palladium contained in the composite product according to the embodiment is not particularly limited. For example, palladium may be contained in the palladium particles as a palladium compound.

In the present embodiment, the palladium particles preferably have a diffraction pattern of XRD analysis that does not indicate the crystal structure of the palladium metal crystal. In this case, the first composite product according to the present embodiment exhibits excellent catalytic performance.

In the present embodiment, the palladium particles may contain amorphous palladium. The palladium particles may contain palladium that is not in a form substituted with a part of molybdenum in the crystal structure of molybdenum disulfide. The palladium particles may contain zero valence palladium. The palladium particles may contain palladium without having the crystal structure of the palladium metal crystal.

With respect to the ratio of the content of palladium in the contained form described above, the palladium particles may contain 50% or more of amorphous palladium with respect to the palladium contained in the palladium particles in terms of mole. The palladium particles may contain 50% or more of palladium that is not in the form substituted with a part of molybdenum in the crystal structure of molybdenum disulfide with respect to the palladium contained in the palladium particles in terms of mole. The palladium particles may contain 50% or more of zero valence palladium with respect to the palladium contained in the palladium particles in terms of mole. The palladium particles may contain 50% or more of palladium without having the crystal structure of the palladium metal crystal (close-packed structure) with respect to the palladium contained in the palladium particles in terms of mole.

The first composite product according to the present embodiment may contain amorphous palladium. The first composite product according to the embodiment may contain palladium that is not in the form substituted with a part of molybdenum in the crystal structure of the molybdenum carbide. The first composite product according to the embodiment may contain palladium of which valence is zero valence. The first composite product according to the embodiment may contain palladium without having the crystal structure of the palladium metal crystal.

With respect to the ratio of the content of palladium in the above embodiment, the first composite product according to the embodiment may contain 50% or more of amorphous palladium with respect to the palladium contained in the first composite product in terms of mole. The first composite product according to the embodiment may contain 50% or more of palladium that is not in the form substituted with a part of molybdenum in the crystal structure of the molybdenum carbide with respect to the palladium contained in the first composite product in terms of mole. The first composite product according to the embodiment may contain 50% or more of palladium of which valence is zero valence with respect to the palladium contained in the composite product in terms of mole. The first composite product according to the embodiment may contain 50% or more of palladium without having the crystal structure of the palladium metal crystal with respect to the palladium contained in the first composite product in terms of mole.

Palladium in the first composite product according to the embodiment may form palladium clusters. The palladium in the palladium particles may also form the palladium clusters.

The presence of crystal structures containing palladium can be detected by diffraction profiles obtained from analysis by XRD using the first composite product according to the embodiment as a sample.

With the first composite product according to the embodiment described above, the molybdenum carbide and metal particles (preferably palladium particles) are composited together, whereby excellent catalytic performance can be exhibited.

Furthermore, it is conceivable that more excellent catalytic performance can be exhibited when the noble metal in the noble metal particles does not form the crystal structure of the noble metal crystal and is preferably present as the aggregates of noble metal atoms in the molybdenum carbide.

The first composite product according to the embodiment can be suitably used as a catalyst, particularly as a hydrogen generation catalyst applied to water electrolysis and the like.

The first composite product according to the embodiment can be suitably used as an electrode material used as a constituent material of the electrocatalyst layer.

### <Method for Producing First Composite Product>

The method for producing the first composite product according to the embodiment is not particularly limited. Typically, the method includes a step of mixing the molybdenum carbide and a noble metal solution, and more preferably includes a step of mixing the molybdenum carbide and a palladium solution.

In the present embodiment, the first composite product may contain only one type of the noble metal solution or two or more types thereof.

The palladium solution can be obtained by dissolving any palladium source in a solvent. As the palladium source, any palladium source that can produce the palladium solution may be used. Examples of the palladium source include palladium compound such as palladium acetate, palladium nitrate, palladium nitrite, palladium sulfate, palladium carbonate, palladium chloride, palladium hydroxide, and palladium oxide.

In the present embodiment, the first composite product may contain only one type of the palladium solution or two or more types thereof.

As the solvent, any solvent that can dissolve the palladium source may be used. Examples of the solvent include alcohols such as methanol, benzene, dichloromethane, acetone, and chloroform.

In the present embodiment, the first catalyst ink may include only one type of the solvent or two or more types thereof.

The method for mixing is not particularly limited. The palladium solution is preferably mixed with the dispersion liquid of the molybdenum carbide.

The dispersion liquid of the molybdenum carbide can be obtained by mixing the molybdenum carbide with the solvent exemplified in the palladium solution described above.

The composite product of the molybdenum carbide and the palladium particles can be formed by bringing the molybdenum carbide into contact with the palladium solution by mixing the palladium solution and the molybdenum carbide to obtain a mixture.

From the viewpoint of preventing aggregation of the molybdenum carbide, for example, the mixture of the palladium solution and the molybdenum carbide is preferably stirred. As the degree of the stirring, 50 rpm to 1,000 rpm may be exemplified.

The concentration of palladium in the palladium solution may be, for example, 0.00001 mol/L to 0.1 mol/L or 0.0001 mol/L to 0.01 mol/L.

The temperature of the mixture of the molybdenum carbide and the palladium solution may be as high as possible to form the first composite product. As one example, the temperature may be 10°C to 100°C or 20°C to 80°C.

The retention time of the mixture of the molybdenum carbide and the palladium solution is as long as possible to form the first composite product. As one example, the time may be 10 minutes or more and within 48 hours or 30 minutes or more and within 12 hours.

In the method for producing the first composite product according to the embodiment, light irradiation may be performed to the mixture of the molybdenum carbide and the palladium solution in order to promote photoreduction of palladium. The light irradiation can be performed by appropriately selecting the light intensity and wavelength to the extent that photoreduction of palladium occurs. The light irradiation may be performed by installing a light source and controlling the degree of light, or may be the irradiation of light from the normal indoor environment (by fluorescent lamps, LEDs, or other lightings) or the irradiation of natural light.

The first composite product can be produced without performing the heat treatment in the method for producing the first composite product according to the embodiment. For example, the obtained first composite product and the mixture of the palladium solution and the molybdenum carbide are preferably not heated at 200°C or higher, more preferably not heated at 100°C or higher, and still more preferably not heated 80°C or higher.

After the composite product is formed from the above mixture, the composite product can be isolated by performing treatment such as centrifugation and drying to easily collect the first composite product according to the embodiment.

### <Hydrogen Generation Catalyst>

The first composite product according to the embodiment can be suitably used as a catalyst for the hydrogen evolution reaction (HER) (herein also referred to as "hydrogen generation catalyst"). Also, the first composite product according to the embodiment can be used as the hydrogen generation catalyst used together with the conductive material. That is, preferable examples of the hydrogen generation catalyst include a substance containing the first composite product according to the embodiment.

The hydrogen generation catalyst may further contain the conductive material in addition to the first composite product according to the embodiment. The catalytic activity of the hydrogen generation catalyst containing the first composite product according to the embodiment and the conductive material in the hydrogen evolution reaction (HER) is higher.

The conductive material may be a publicly known conductive material.

Examples of the conductive material include carbon and a metal that have high conductivity.

The hydrogen generation catalyst may contain only one type of the conductive material or two or more types thereof.

Examples of the carbon include carbon black such as acetylene black, Cabot carbon black, and Ketjen Black, graphite, carbon fibers, and metal powders. Ketjen Black has a high specific surface area and conductivity, and is excellent from the viewpoint of suppressing aggregation of the molybdenum carbide.

Examples of the metal that is the conductive material include gold, silver, copper, aluminum, rhodium, molybdenum, tungsten, iron, nickel, cobalt, and indium.

The metal serving as the conductive material, which is different from the noble metal in the first composite product according to the embodiment, is merely mixed with the first composite product according to the embodiment in the hydrogen generation catalyst.

The hydrogen generation catalyst may contain only one type of the metal that is the conductive material or two or more types thereof.

As the conductive material, for example, the hydrogen generation catalyst may contain the carbon and no metal, may contain the metal and no carbon, or may contain both the metal and the carbon.

The content of the conductive material in the hydrogen generation catalyst is preferably 0.1 mass% to 50 mass% and more preferably 0.5 mass% to 40 mass% with respect to the content of the first composite product according to the embodiment.

The ratio of the total content of the first composite product according to the embodiment and the conductive material in the hydrogen generation catalyst to the whole mass (100 mass%) of the hydrogen generation catalyst is preferably 80 mass% or more, more preferably 90 mass% or more, and still more preferably 95 mass% or more, and may be, for example, any of 97 mass% or more and 99 mass% or more, or 100 mass%. When the ratio is equal to or more than the lower limit value, the catalytic activity of the hydrogen generation catalyst in the hydrogen evolution reaction (HER) is higher. The ratio may be 100 mass% or less.

### <Second Catalyst Ink>

The first composite product is suitable as a component contained in a catalyst ink.

The catalyst ink according to the embodiment (hereinafter also referred to as a "second catalyst ink") includes the first composite product according to the embodiment and a solvent.

The second catalyst ink according to the embodiment can include the first composite product according to the embodiment, a polyelectrolyte, and a solvent.

The second catalyst ink according to the present embodiment may further include a conductive material. Examples of the conductive materials include those exemplified above.

The second catalyst ink can be applied to, for example, a substrate for a working electrode to form a catalyst layer.

As the polyelectrolyte, polyelectrolytes generally used in a catalyst layer can be used. Specific examples thereof include a perfluorocarbon polymer having a sulfonic acid group (for example, Nafion (registered trademark)), a hydrocarbon-based polymer compound having a sulfonic acid group, a polymer compound doped with an inorganic acid such as phosphoric acid, organic/inorganic hybrid polymers partially substituted with proton-conducting functional groups, and a proton conductor in which a polymer matrix is impregnated with a phosphoric acid solution or a sulfuric acid solution.

Examples of the solvent include a solvent that is capable of dispersing the first composite product according to the embodiment and being applied to the substrate for a working electrode to form a catalyst layer. Preferred examples of the solvent include alcohols such as 1-propanol, 2-propanol, 1-butanol, 2-butanol, 1-pentanol, 2-pentanol, 1-hexanol, 2-hexanol, 1-heptanol, and 2-heptanol.

### <Composite Product of Transition Metal Species and Molybdenum Carbide>

The composite product according to the present embodiment (hereinafter referred to as a "second composite product") is a composite product of at least one transition metal species selected from the group consisting of transition metals and transition metal compounds and the molybdenum carbide.

### (Transition Metals and Transition Metal Compounds)

In the present embodiment, the transition metals are not particularly limited. Nickel, iron, cobalt, chromium, vanadium, manganese, copper, zinc, ruthenium, and iridium are preferable and nickel, iron, cobalt, and manganese are more preferable.

In the present embodiment, the transition metal compounds are not particularly limited. Examples of the transition metal compounds include transition metal hydroxides and transition metal oxides. Of these transition metal compounds, nickel compounds are preferable and Ni(OH)₂ and NiO are more preferable. The transition metal compounds may be compounds containing two or more transition metals such as NiFeOₓ.

In the present embodiment, the second composite product may contain only one type of the transition metal species or two or more types thereof.

The primary particle shape of the nickel compounds in a two-dimensional image photographed with a transmission electron microscopy (TEM) may be a particle shape, a spherical shape, a plate shape (a sheet shape), a needle shape, a string shape, or a ribbon shape by visual observation or an image photograph, or may include a combination of these shapes. In the present embodiment, with respect to the nickel compound, the primary particle shape in the two-dimensional image photographed with TEM is preferably the sheet shape.

With the second composite product according to the embodiment, the molybdenum carbide and the transition metal species (preferably the nickel compound) are composited to exhibit excellent catalytic performance.

The second composite product according to the embodiment can be suitably used as a catalyst, particularly as an oxygen generation catalyst applied to water electrolysis and the like.

The second composite product according to the embodiment can be suitably used as an electrode material used as a constituent material of the electrocatalyst layer.

### <Method for Producing Second Composite Product>

The method for producing the second composite product according to the embodiment is not particularly limited. Typically, the method includes a step of mixing the molybdenum carbide and the solution of the transition metal source.

Examples of the transition metal source include transition metal acetates, transition metal nitrates, transition metal nitrites, transition metal sulfates, transition metal carbonates, transition metal chlorides, transition metal hydroxides, and transition metal oxides. Of these compounds, nickel acetate is preferable as the transition metal source. The transition metal source is preferably an aqueous solution and more preferably an aqueous nickel acetate solution.

In the present embodiment, the second composite product may contain only one type of the transition metal source or two or more types thereof.

In the case where the aqueous nickel acetate solution is used as the transition metal source, urea may be mixed in order to provide a basic environment by generating amines in the aqueous nickel acetate solution and to facilitate the formation of the target Ni(OH)₂.

The method for mixing is not particularly limited. The nickel solution is preferably mixed with the dispersion liquid of the molybdenum carbide.

As the dispersion liquid of the molybdenum carbide, the mixture of water and the molybdenum carbide may be exemplified.

The composite product of the molybdenum carbide and the nickel compound solution can be formed by bringing the molybdenum carbide into contact with the nickel compound solution by mixing the nickel compound solution and the molybdenum carbide to obtain a mixture.

From the viewpoint of preventing aggregation of the molybdenum carbide, for example, the mixture of the nickel compound solution and the molybdenum carbide is preferably stirred. As the degree of the stirring, 50 rpm to 1,000 rpm may be exemplified.

The concentration of nickel in the nickel compound solution may be, for example, 0.0001 mol/L to 1 mol/L or 0.001 mol/L to 0.1 mol/L.

The temperature of the mixture may be as high as possible to form the second composite product. As one example, the temperature may be 10°C to 100°C or 20°C to 90°C.

The retention time of the mixture is as long as possible to form the second composite product. As one example, the time may be 10 minutes or more and within 48 hours or 30 minutes or more and within 12 hours.

The second composite product can be produced without performing the heat treatment in the method for producing the second composite product according to the embodiment. For example, the obtained second composite product and the mixture of the nickel compound solution and the molybdenum carbide are preferably not heated at 200°C or higher, more preferably not heated at higher than 100°C, and even more preferably not heated at higher than 80°C.

After the second composite product is formed from the above mixture, the second composite product can be isolated by performing treatment such as centrifugation and drying to easily collect the second composite product according to the embodiment.

### <Oxygen Generation Catalyst>

The second composite product according to the embodiment can be suitably used as a catalyst for the oxygen evolution reaction (OER) (herein also referred to as "oxygen generation catalyst"). Also, the second composite product according to the embodiment can be used as the oxygen generation catalyst used together with the conductive material. That is, preferable examples of the oxygen generation catalyst include a substance containing the second composite product according to the embodiment. The oxygen generation catalyst may further contain the conductive material in addition to the second composite product according to the embodiment. The catalytic activity of the oxygen generation catalyst containing the second composite product according to the embodiment and the conductive material in the oxygen evolution reaction (OER) is higher.

The conductive material is the same as the conductive material in the oxygen generation catalyst.

The oxygen generation catalyst may contain only one type or two or more types of the metals that serves as the conductive material.

As the conductive material, for example, the oxygen generation catalyst may contain the carbon and no metal, may contain the metal and no carbon, or may contain both the metal and the carbon.

The content of the conductive material in the oxygen generation catalyst is preferably 0.1 mass% to 50 mass% and more preferably 0.5 mass% to 40 mass% with respect to the content of the second composite product according to the embodiment.

The ratio of the total content of the second composite product according to the embodiment and the conductive material in the oxygen generation catalyst to the whole mass (100 mass%) of the oxygen generation catalyst is preferably 80 mass% or more, more preferably 90 mass% or more, and further preferably 95 mass% or more, and may be, for example, any of 97 mass% or more and 99 mass% or more, or 100 mass%. When the ratio is equal to or more than the lower limit value, the catalytic activity of the oxygen generation catalyst in the oxygen evolution reaction (OER) is higher. The ratio may be 100 mass% or less.

In the case where the oxygen generation catalyst according to the embodiment is applied to a battery, the electrolyte is not particularly limited and any known electrolyte can be used. Potassium hydroxide solution is preferable.

### <Third Catalyst Ink>

The second composite product is suitable for use as a component contained in a catalyst ink.

The catalyst ink according to the embodiment (hereinafter also referred to as a "third catalyst ink") includes the second composite product according to the embodiment and a solvent.

The third catalyst ink according to the embodiment can include the second composite product according to the embodiment, the polyelectrolyte, and the solvent.

The third catalyst ink according to the present embodiment may further include a conductive material. Examples of the conductive materials include those exemplified above.

The third catalyst ink can be applied to, for example, a substrate for a working electrode to form a catalyst layer.

The polyelectrolytes and the solvent are the same as those in the second catalyst ink described above.

### [Examples]

Next, the present invention will be described in more detail with reference to Examples, but the invention is not limited to the following Examples.

### (Production of Molybdenum Trioxide Powder)

An RHK simulator (manufactured by Noritake Co., Ltd.) was used as the calcining furnace, and a VF-5N dust collector (manufactured by AMANO Corporation) was used as the dust collector to produce molybdenum trioxide.

1.5 kg of aluminum hydroxide (manufactured by Nippon Light Metal Company, Ltd.) and 1 kg of molybdenum trioxide (manufactured by Nippon Muki Co., Ltd.) were mixed and then fed in a saggar. The resultant mixture was calcined at a temperature of 1,100°C for 10 hours. During the calcining, outside air (blowing speed: 150 L/min, outside air temperature: 25°C) was introduced from a side surface and a lower surface of the calcining furnace. Molybdenum trioxide was evaporated in the calcining furnace and then cooled in the vicinity of the dust collector to precipitate as particles. 900 g of molybdenum trioxide 1 was obtained using the dust collector.

The median diameter D₅₀ of the primary particles determined by dynamic light scattering was 87.8 nm, and the purity (content ratio of MoO₃) of molybdenum trioxide 1 was confirmed to be 99.9 mass% by fluorescence X-ray measurement.

The crystal structure analysis of molybdenum trioxide (1) by an X-ray diffraction (XRD) method resulted in observing peaks attributed to α-crystal molybdenum trioxide and β-crystal molybdenum trioxide. No other peaks were observed. Then the peak intensity ratio of the plane (011) of the β crystal to the plane (021) of the α crystal was compared, and β(011)/α(021) was 4. Further, the crystallite size of molybdenum trioxide (1) was evaluated using the Scherrer method by applying integrated powder X-ray analysis software PDXL2 manufactured by Rigaku Corporation and determining a XRD instrument constant using LaB₆ (NIST SRM660c LaB₆ Standard Powder) as the standard material. Molybdenum trioxide (1) was confirmed to have a crystal structure containing the α-crystal having an average crystallite size of 15.7 nm and the β-crystal having an average crystallite size of 16.8 nm.

### <Evaluation of Molybdenum Oxide Powder>

### [Method for Measuring Average Particle Diameter of Primary Particles of Molybdenum Trioxide Powder]

0.1 g of the molybdenum trioxide powder was added to 10 cc of ethanol and subjected to an ultrasonic treatment in an ice bath for 4 hours, and then the concentration thereof was appropriately adjusted with ethanol to a concentration within a measurable range of a dynamic light scattering type particle diameter distribution measuring device (Nanotrac Wave II manufactured by MicrotracBEL) to obtain a measurement sample. Using the measurement sample, the particle diameter distribution in the range of particle diameters of 0.0001 µm to 10 µm was measured by a dynamic light scattering type particle diameter distribution measuring device (Nanotrac Wave II manufactured by MicrotracBEL) to calculate the median diameter D₅₀. However, for those having a median diameter D₅₀ more than 10 µm, a solution was similarly adjusted, and the particle diameter distribution in the range of particle diameters of 0.015 µm to 500 µm was measured with a laser diffraction particle size distribution analyzer (SALD-7000 manufactured by Shimadzu Corporation) to calculate the median diameter D₅₀.

### (Crystal Structure Analysis of Molybdenum Trioxide Powder: XRD Method)

The sample of the collected molybdenum compound obtained in each Example was filled in a holder for a measurement sample having a depth of 0.5 mm, set in an X-ray diffraction (XRD) apparatus (Ultima IV, manufactured by Rigaku Corporation, as an optical system, a parallel beam method plus scintillation counter and a rotation stage were used), and was subjected to measurement under conditions of Cu/Kα rays, 40 kV/40 mA, a scanning speed (2θ) of 2°/min, a step (2θ) of 0.02°, and a scanning range (2θ) of 10° or more and 70° or less.

### [Method for Measuring Crystallite Size of Molybdenum Trioxide Powder]

The crystallite size was evaluated using the Scherrer method (Scherrer K = 0.94 was used) by applying integrated powder X-ray analysis software PDXL2 manufactured by Rigaku Corporation and determining the XRD instrument constant with LaB₆ (NIST SRM660c LaB₆ Standard Powder) as the standard material.

### [Purity Measurement of Molybdenum Trioxide: XRF Analysis]

About 20 mg to about 30 mg of a sample of the collected molybdenum trioxide powder was taken on a filter paper and covered with a PP film, and the composition of the molybdenum trioxide powder was analyzed using an X-ray fluorescence analyzer Primus IV (manufactured by Rigaku Corporation). The amount of molybdenum determined based on an XRF analysis result was determined in terms of molybdenum trioxide (mass%) with respect to 100% by mass of the molybdenum trioxide powder.

### (Example 1: Synthesis of Mo₂C)

0.5 g of molybdenum trioxide 1, 0.17 g of Ketjen Black (EC300J manufactured by Lion Specialty Chemicals Co., Ltd.), 0.33 g of sodium chloride, and 0.33 g of potassium chloride were mixed in a mortar for 1 minute. Then, the resultant mixture was placed in a crucible and calcined at 850°C for 3 hours under a nitrogen atmosphere. After natural cooling, the calcined product was washed with ion exchanged water to remove salts. According to the XRD measurement, the obtained molybdenum carbide was confirmed to exhibit the α crystal structure of molybdenum carbide (Mo₂C).

### (Examples 2 and 3: Synthesis of Mo₂C)

Molybdenum carbides were synthesized in the same manner as the manner in Example 1 except that the raw materials were changed to those listed in Table 1.

### (Comparative Example 1)

Commercially available molybdenum carbide (manufactured by High Purity Chemical Laboratory Co., Ltd.) was evaluated in the same manner as the manner for the molybdenum carbides in Examples 1 to 3. The results are listed in Table 2.

### (Comparative Example 2)

Ketjen Black (EC300J manufactured by Lion Specialty Chemicals Co., Ltd.) was evaluated in the same manner as the manner for the molybdenum carbides in Examples 1 to 3. The results are listed in Table 2.

### (Comparative Example 3)

203.9 g of Ketjen Black (EC300J manufactured by Lion Specialty Chemicals Co., Ltd.) and 33.6 g of molybdenum carbide (manufactured by Kohshin Chemicals Corporation) were mixed in a mortar. The obtained mixture was evaluated in the same manner as the manner for the molybdenum carbides in Examples 1 to 3. The results are listed in Table 2.

**[Table 1]**

| | Raw materials (g) | | | | | Calcining conditions | |
|---|---|---|---|---|---|---|---|
| | MoO₃(1) | KB | KCl | NaCl | KOH | Calcining temperature (°C) | Calcining time (hr) |
| Ex. 1 | 0.5 | 0.17 | 0.33 | 0.33 | - | 850 | 3 |
| Ex. 2 | 0.5 | 0.25 | 0.38 | 0.38 | - | 850 | 3 |
| Ex. 3 | 0.5 | 0.17 | - | - | 0.67 | 850 | 3 |
| Comp. Ex. 1 | Commercially available Mo₂C | | | | | - | - |
| Comp. Ex. 2 | KB | | | | | - | - |
| Comp. Ex. 3 | Commercially available Mo₂C + KB | | | | | - | - |

In Table 1, "MoO₃(1)" represents molybdenum trioxide 1 and "KB" represents Ketjen Black (EC300J manufactured by Lion Specialty Chemicals, Co., Ltd.).

### <Evaluation>

The following evaluations were performed on the molybdenum carbides in Examples 1 to 3, the commercially available molybdenum carbide in Comparative Example 1, Ketjen Black in Comparative Example 2, and the mixture in Comparative Example 3.

### [Elemental Analysis]

The content of molybdenum was determined by acid decomposition under heated and sealed condition-ICP-AES (Inductively Coupled Plasma Atomic Emission Spectrometry). More specifically, samples were dissolved in a mixture of sulfuric acid and nitric acid at 180°C for 12 hours or more and the resultant solutions were measured under the following conditions.

ICP emission spectrometry (instrument: iCAP 6300 DUO manufactured by Thermo Fisher Scientific Inc.)
PF power: 1150 W
Flow rate: 52 rpm
Auxiliary gas: 0.5 L/min
Nebulizer gas: 0.6 L/min
Plasma view: Axial

The carbon content was determined by CHN elemental analysis (MICROCORDER JM10 manufactured by J-Science Labs Co., Ltd).

### [Measurement of Specific Surface Area: BET Method]

The samples of the molybdenum carbides were measured with a specific surface area meter (BELSORP-mini manufactured by MicrotracBEL), and the surface area per gram of the sample measured based on the amount of the adsorbed nitrogen gas by the BET method was calculated as the specific surface area (m²/g). The results are listed in Table 2 as "BET Specific surface area (m²/g)".

### [Crystal Structure Analysis: XRD Method]

The sample obtained from each Example was filled in a holder for a measurement sample having a depth of 0.5 mm, set in a X-ray diffraction (XRD) apparatus (Ultima IV manufactured by Rigaku Corporation), and subjected to measurement under conditions of Cu/Kα rays, 40 kV/40 mA, a scanning speed of 2θ = 2°/min, and a scanning range of 2θ = 10° or more and 70° or less. The results are listed in Table 2 as "Crystallite size (nm)".

### [Method for Measuring Median Diameter D₅₀]

0.1 g of the sample powder was added to 20 cc of acetone and the resultant mixture was subjected to ultrasonic treatment in an ice bath for 4 hours. Thereafter, the concentration thereof was appropriately adjusted with acetone to a concentration within a measurable range of a dynamic light scattering type particle diameter distribution measuring device (Nanotrac Wave II, manufactured by MicrotracBEL Corp.) to give a measurement sample. Using this measurement sample, the particle diameter distribution in the range of a particle diameters of 0.0001 µm to 10 µm was measured by a dynamic light scattering type particle diameter distribution measuring device to calculate the median diameter D₅₀, which is a diameter of which the ratio of accumulated volume percentage was 50%.

The results are listed in Table 2 as "D₅₀ (nm)".

### [Analysis by Raman Spectroscopy]

A powder sample was placed on a slide glass and measured with a laser Raman spectrophotometer (NRS-5500 manufactured by JASCO Corporation) under the measurement conditions of an excitation laser of 532 nm, a laser intensity of 0.6 mW, an exposure time of 30 sec, and point measurement using an objective lens having a magnification of 100 times. After measurement, a baseline-corrected XPS spectrum was analyzed with analysis software Spectra manager. The results are listed in Table 2 as "G/D(a.u.)".

### [Methods for Measuring Volume Resistivity]

A sample of about 0.5 g was placed in a sample powder measuring jig, and resistance was measured by an automatic powder resistivity measuring system (MCP-PD600 manufactured by Nittoseiko Analytech Co., Ltd.) under a set load in the range of 4 kN to 20 kN under activity. The volume resistivity was calculated from the volume of the powder. The results are listed in Table 2 as "Volume Resistivity at 64 MPa".

The results of the measurements are listed in Table 2.

**[Table 2]**

| | Composition analysis | | BET specific surface area (m²/g) | Crystallite size (nm) | D₅₀ (nm) | G/D (a.u.) | Volume resistivity at 64 MPa (Ω·cm) |
|---|---|---|---|---|---|---|---|
| | C (wt%) | Mo (wt%) | | | | | |
| Ex. 1 | 18.5 | 78.5 | 164.48 | 36 | 439.4 | 0.84 | 3.44E-03 |
| Ex. 2 | 29.1 | 67.2 | 397.68 | 34.6 | 472.3 | 0.83 | 9.34E-03 |
| Ex. 3 | 62.7 | 21.8 | 1038.9 | 36 | 1204 | 0.86 | 1.47E-02 |
| Comp . Ex. 1 | 5.7 | 93 | 0.79 | 33.1 | 1831 | - | 1.04E-01 |
| Comp . Ex. 2 | 100 | 0 | 1270 | - | 1157 | 0.74 | 2.54E-03 |
| Comp . Ex. 3 | 18.5 | 78.5 | 186.39 | 33 | 5041 | 0.74 | 3.80E-02 |

The result of the XRD analysis is illustrated in FIG. 2. As illustrated in FIG. 2, all of the molybdenum carbides obtained in Examples 1 to 3 were confirmed to exhibit the crystal structure of molybdenum carbide (Mo₂C). All of the molybdenum carbides in Examples 1 to 3 were confirmed to have an α crystal of a molybdenum carbide (Mo₂C) crystal structure.

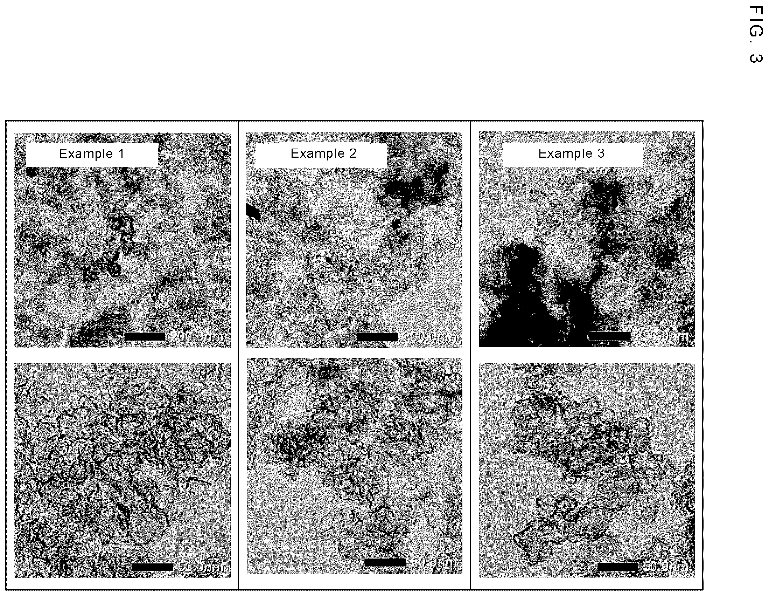

FIG. 3 illustrates the observed images of each of the particles in Examples 1 to 3 obtained by using a transmission electron microscope (TEM, JEM-1400 manufactured by JEOL Ltd.). As illustrated in FIG. 3, all of the molybdenum carbides in Examples 1 to 3 were confirmed to have a sheet structure.

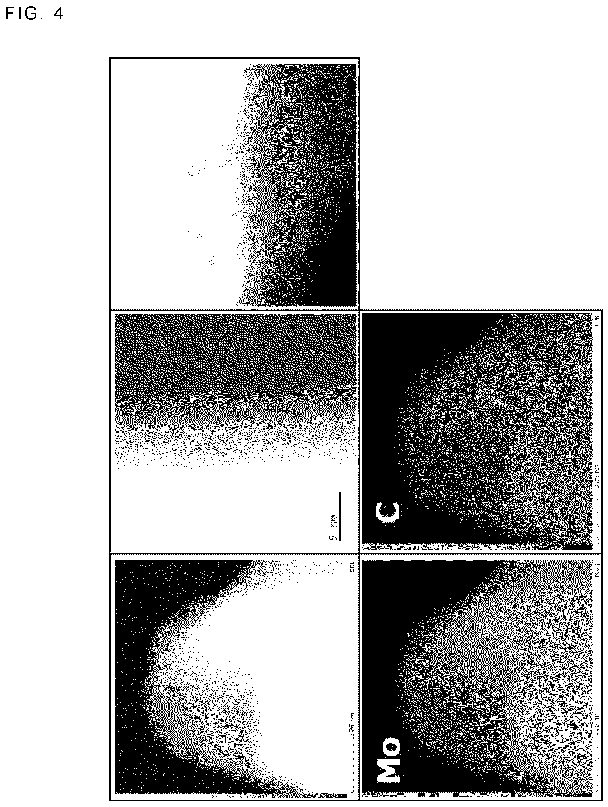

FIG. 4 illustrates the observed images of the particles in Examples 1 obtained by using a high-resolution transmission electron microscope (HRTEM, JEM-ARM300F manufactured by JEOL Ltd.). The EDS mapping image illustrates that Mo and C appeared to be overlapped and the crystal lattice image of Mo₂C was observed by the high-resolution TEM, confirming that Mo₂C is the main phase of the compound in Example 1. An oxide layer (MoO₃) was observed on the surface of the particles.

### [Preparation of Catalyst Ink and Evaluation of Hydrogen Generation Activity (1)]

4 mg of any one of the molybdenum carbides in Examples 1 to 3, the commercially available molybdenum carbide in Comparative Example 1, Ketjen Black in Comparative Example 2, and the mixture in Comparative Example 3, 2 mg of Ketjen Black, and 40ul of 5% Nafion dispersion solution (Nafiondispersionsolution manufactured by Fujifilm Wako Pure Chemicals Corporation) were dispersed in 1 ml of ethanol by sonication for 1 hour to form an ink. 20 ul of the obtained ink dispersion liquid was applied to electrode surfaces and the liquid on the surface was dried naturally. Then, the electrodes were transferred to a vacuum dryer and dried at 60°C for 6 hours or more. The hydrogen evolution activity of the prepared electrode was evaluated using a three-electrode method. As the evaluation conditions, a LSV method was used and a scan voltage range was -0.3 V to 0 V at a scanning speed of 5 mV/S. Overvoltages (mV) at a current density of 10 mA/cm² and the current densities (mA/cm²) at a voltage of -0.3 V are listed in Table 3.

**[Table 3]**

| | Overvoltage (mV) | Current density (mA/cm²) |
|---|---|---|
| Ex. 1 | 249 | 28.6 |
| Ex. 2 | 284 | 14.6 |
| Ex. 3 | Impossible to measure | 0.7 |
| Comp. Ex. 1 | 234 | 33.9 |
| Comp. Ex. 2 | Impossible to measure | 1.2 |
| Comp. Ex. 3 | 256 | 22.1 |

### (Example 4: Synthesis of Palladium-Molybdenum Carbide Composite Product 1)

100 mg of the molybdenum carbide in Example 2 was dispersed in 50 ml of methanol (CH₃OH, a reagent manufactured by Kanto Chemical Co., Inc.) by sonication for 30 minutes to give a dispersion liquid. 42.2 mg of palladium acetate (Pd(CH₃COO)₂, a reagent manufactured by Kanto Chemical Co., Inc.) was dissolved in methanol, and then the obtained solution was added to the above dispersion liquid with stirring. The dispersion liquid was then stirred at room temperature under light irradiation for 2 hours or more. Precipitate in the dispersion liquid was collected by centrifugation, washed by sonication three times with water, and dried in vacuum to give a Pd-modified molybdenum carbide powder (palladium-molybdenum carbide composite product 1).

### (Examples 5 and 6: Synthesis of Palladium-Molybdenum Carbide Composite Product 2 and Palladium-Molybdenum Carbide Composite Product 3)

A palladium-molybdenum carbide composite product 2 and a palladium-molybdenum carbide composite product 3 were synthesized in the same manner as the manner in Example 4 except that the raw materials were changed to those listed in Table 4.

### (Comparative Example 1)

Commercially available molybdenum carbide (manufactured by High Purity Chemical Laboratory Co., Ltd.) was evaluated in the same manner as the manner for the palladium-molybdenum carbide composite products 1 to 3 in Examples 4 to 6. The results are listed in Table 5.

### (Comparative Example 4)

Palladium-modified Ketjen Black (4% Pd-KB) was synthesized in the same manner as the manner in Example 4 except that the raw materials were changed to those listed in Table 4.

**[Table 4]**

| | Raw materials | | | | |
|---|---|---|---|---|---|
| | Mo₂C-4 (mg) | Mo₂C-6 (mg) | KB (mg) | Palladium acetate (mg) | Methanol (mL) |
| Ex. 4 | 100 | - | - | 8.8 | 100 |
| Ex. 5 | - | 100 | - | 23.4 | 200 |
| Ex. 6 | - | 100 | - | 52.7 | 300 |
| Comp. Ex. 1 | Commercially available Mo₂C | | | | |
| Comp. Ex. 4 | - | - | 100 | 8.8 | 100 |

In Table 4, "Mo₂C-4" represents the molybdenum carbide in Example 1, "Mo₂C-6" represents the molybdenum carbide in Example 2, and "KB" represents Ketjen Black (EC300J manufactured by Lion Specialty Chemicals, Inc.).

### <Evaluation>

The following evaluations were performed on the palladium-molybdenum carbide composite products 1 to 3 in Examples 4 to 6, the commercially available molybdenum carbide in Comparative Example 4, and 4% Pd-KB in Comparative Example 5.

### [XRF Analysis]

About 20 mg to 30 mg of a sample was taken on a filter paper and covered with a PP film, and the composition of the sample was analyzed using an X-ray fluorescence analyzer Primus IV (manufactured by Rigaku Corporation). The amount of palladium determined by XRF analysis result was determined as the palladium content (mass%) with respect to 100 mass% of the sample particles. The results are listed in Table 5 as "Pd (wt%)".

### [Crystal Structure Analysis: XRD Method]

Measurement was performed in the same manner as the manner in Examples 1 to 3 and Comparative Examples 1 to 3. The results are listed in Table 5 as "Crystallite size (nm)".

### [Method for Measuring Median Diameter D₅₀]

Measurement was performed in the same manner as the manner in Examples 1 to 3 and Comparative Examples 1 to 3. The results are listed in Table 5 as "D₅₀ (nm)".

### [Analysis by Raman Spectroscopy]

Measurement was performed in the same manner as the manner in Examples 1 to 3 and Comparative Examples 1 to 3. The results are listed in Table 5 as "G/D(a.u.)".

### [Measurement of Specific Surface Area: BET Method]

Calculation was performed as the specific surface area (m²/g) in the same manner as the manner in Examples 1 to 3 and Comparative Examples 1 to 3. The results are listed in Table 5 as "BET specific surface area (m²/g)".

**[Table 5]**

| | Pd Content (wt%) | Crystallite size (nm) | D₅₀ (nm) | G/D (a.u.) | BET specific surface area (m²/g) |
|---|---|---|---|---|---|
| Ex. 4 | 4.2 | 34.6 | 266.6 | 0.84 | 164.5 |
| Ex. 5 | 12.4 | 30 | 716.9 | 0.84 | 94.2 |
| Ex. 6 | 21.1 | 29.5 | 1175 | 0.85 | 40.2 |
| Comp. Ex. 1 | - | 33.1 | 1157 | - | 0.8 |
| Comp. Ex. 4 | 4 | - | 667.1 | 0.73 | 1270 |

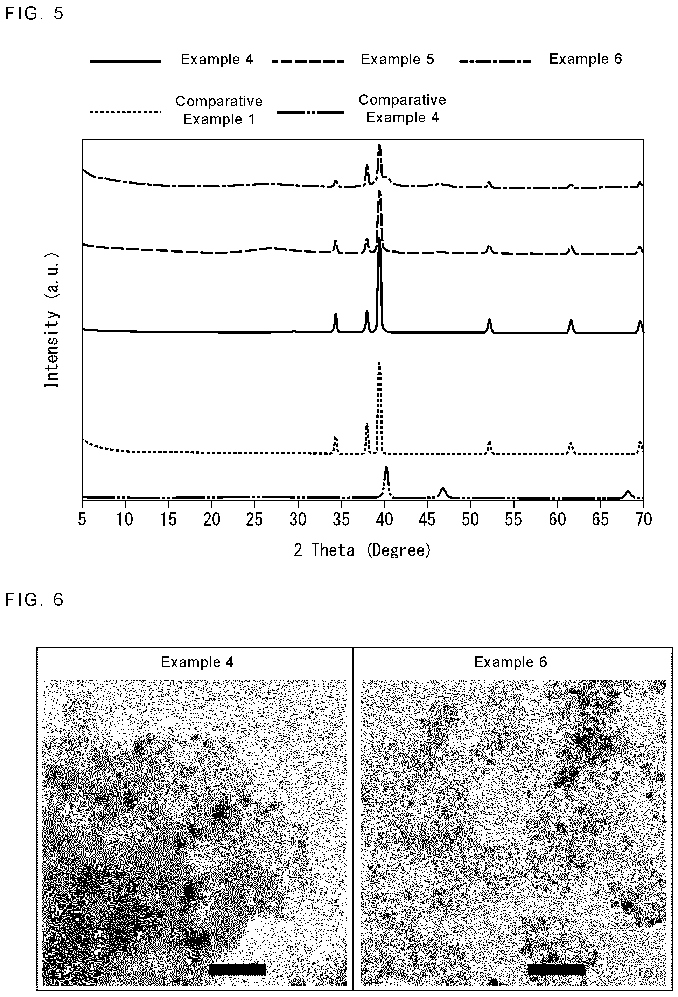

The result of the XRD analysis is illustrated in FIG. 5. FIG. 6 illustrates the observed images of each of the particles in Examples 4 to 6 obtained by using a transmission electron microscope (TEM, JEM-1400 manufactured by JEOL Ltd.). The results illustrated in FIG. 5 and FIG. 6 confirmed that all of the compounds obtained in Examples 4 to 6 were Pd-molybdenum carbide composite products.

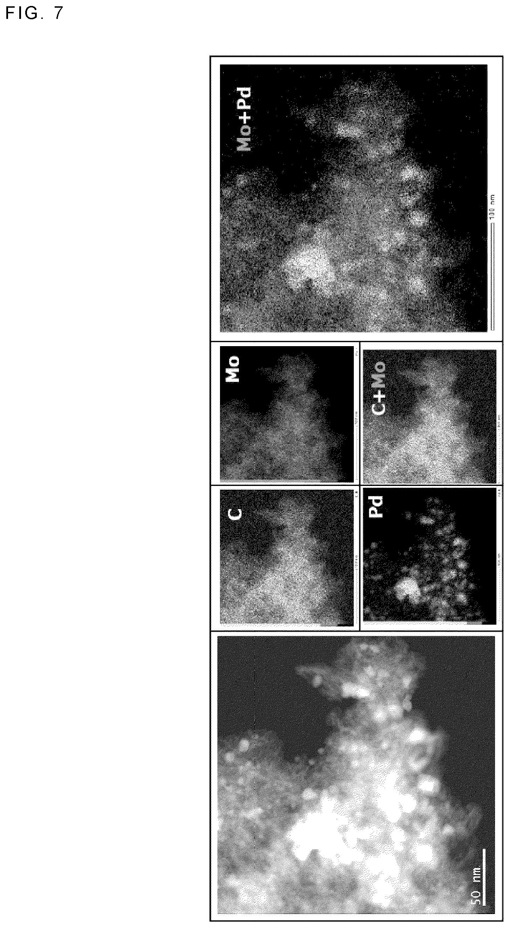

FIG. 7 illustrates the observed images of the particles in Example 4 obtained by using a high-resolution transmission electron microscope (HRTEM, JEM-ARM300F manufactured by JEOL Ltd.). From the EDS mapping image, the white spherical particles are considered to correspond to Pd particles.

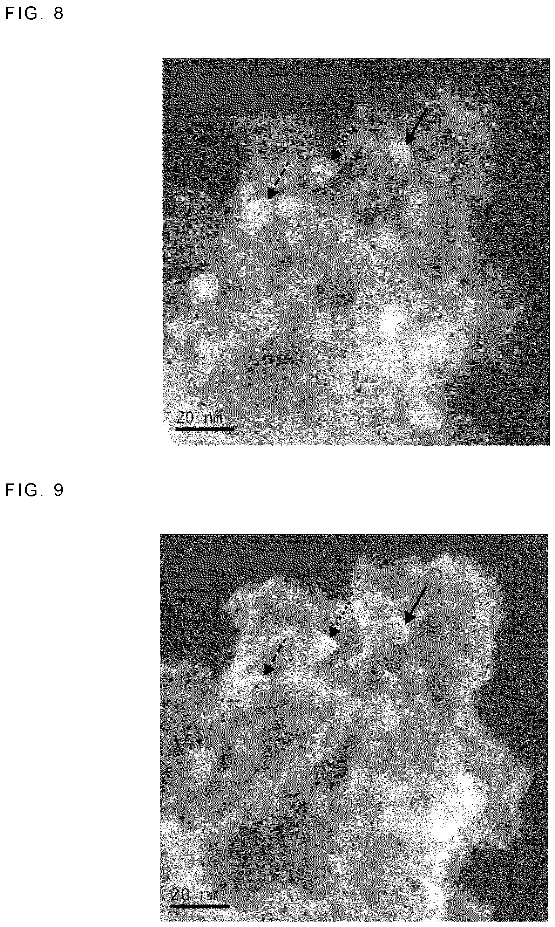

FIG. 8 is a HAADF-STEM image (transmission electron image, JEM-ARM300F manufactured by JEOL Ltd.) of the particles in Example 4. FIG. 9 is a SEI image (secondary electron image, JEM-ARM300F manufactured by JEOL Ltd.) of the particles in Example 4. The same Pd particles are indicated by the same types of arrows in FIG. 8 and FIG. 9.

The results illustrated in FIG. 8 and FIG. 9 confirmed the presence of a large number of Pd nanoparticles of up to about 20 nm on the top surface of the molybdenum carbide.

### [Preparation of Catalyst Ink and Evaluation of Hydrogen Generation Activity (2)]

4 mg of any one of the palladium-molybdenum carbide composite products 1 to 3 in Examples 4 to 6, the commercially available molybdenum carbide in Comparative Example 4, and 4% Pd-KB in Comparative Example 5, 2 mg of Ketjen Black, and 40ul of 5% Nafion dispersion solution (Nafiondispersionsolution manufactured by Fujifilm Wako Pure Chemicals Corporation) were dispersed in 1 ml of ethanol by sonication for 1 hour to form an ink. 20 ul of the obtained ink dispersion liquid was applied to electrode surfaces and the liquid on the surface was dried naturally. Then, the electrodes were transferred to a vacuum dryer and dried at 60°C for 6 hours or more. The hydrogen evolution activity of the prepared electrode was evaluated using a three-electrode method. As the evaluation conditions, a LSV method was used and a scan voltage range was -0.3 V to 0 V at a scanning speed of 5 mV/S. Overvoltages (mV) at a current density of 10 mA/cm² and the current densities (mA/cm²) at a voltage of -0.3 V are listed in Table 6.

**[Table 6]**

| | Overvoltage (mV) | Current density (mA/cm²) |
|---|---|---|
| Ex. 4 | 121 | 123.8 |
| Ex. 5 | 106 | 163.4 |
| Ex. 6 | 56 | 214.7 |
| Comp. Ex. 1 | 234 | 33.9 |
| Comp. Ex. 4 | 235 | 21.7 |

### (Example 7: Synthesis of Nickel Hydroxide-Molybdenum Carbide Composite Product 1)

100 mg of the molybdenum carbide in Example 2 was dispersed in 40 ml of pure water by sonication for 30 minutes to give a dispersion liquid. 198.7 mg of nickel(II) acetate tetrahydrate (Ni(CH₃COO)₂·4H₂O manufactured by Kanto Chemical Co., Ltd.) and 320 mg of urea (NH₂CONH₂ manufactured by Kanto Chemical Co., Ltd.) were dissolved in 40 ml of pure water to give a solution. The dispersion liquid was added to the above solution with stirring and the resultant dispersion liquid was held at 85°C for 3 hours. Then, the precipitate in the dispersion liquid was collected by centrifugation, washed three times with sonication using water, and dried in vacuum to give a Ni(OH)₂-modified molybdenum carbide powder (nickel hydroxide-molybdenum carbide composite product 1).

### (Comparative Example 6)

Commercially available molybdenum carbide (manufactured by High Purity Chemical Laboratory Co., Ltd.) was evaluated in the same manner as the manner for Ni(OH)₂-molybdenum carbide composite product 1 in Example 7. The results are listed in Table 8.

**[Table 7]**

| | Raw materials | | | |
|---|---|---|---|---|
| | Mo₂C-6 (mg) | Nickel acetate tetrahydrate (mg) | Urea (mg) | Pure water (mg) |
| Ex. 7 | 100 | 198.7 | 320 | 80 |
| Comp. Ex. 5 | Commercially available Mo₂C | | | |

In Table 7, "Mo₂C-6" represents the molybdenum carbide in Example 2.

### <Evaluation>

The following evaluations were performed on the nickel hydroxide-molybdenum carbide composite product 1 in Example 7 and the commercially available molybdenum carbide in Comparative Example 8.

### [XRF Analysis]

About 20 mg to 30 mg of a sample was taken on a filter paper and covered with a PP film, and the composition of the sample was analyzed using an X-ray fluorescence analyzer Primus IV (manufactured by Rigaku Corporation). The palladium content (mass%) in the composite product was calculated by taking into account the amount of palladium, the amount of molybdenum, and the composition of the molybdenum carbide (listed in Table 2) determined by the XRF analysis results with respect to 100 mass% of the sample particles.

### [Crystal Structure Analysis: XRD Method]

Measurement was performed in the same manner as the manner in Examples 1 to 3 and Comparative Examples 1 to 3. The results are listed in Table 8 as "Crystallite size (nm)".

### [Method for Measuring Median Diameter D₅₀]

Measurement was performed in the same manner as the manner in Examples 1 to 3 and Comparative Examples 1 to 3. The results are listed in Table 8 as "D₅₀ (nm)".

### [Analysis by Raman Spectroscopy]

Measurement was performed in the same manner as the manner in Examples 1 to 3 and Comparative Examples 1 to 3. The results are listed in Table 8 as "G/D(a.u.)".

### [Measurement of Specific Surface Area: BET Method]

Calculation was performed as the specific surface area (m²/g) in the same manner as the manner in Examples 1 to 3 and Comparative Examples 1 to 3. The results are listed in Table 8 as "BET specific surface area (m²/g)".

**[Table 8]**

| | Ni(OH)₂ content (wt%) | Crystallite size (nm) | D₅₀ (nm) | G/D (a.u.) | BET specific surface area (m²/g) |
|---|---|---|---|---|---|
| Ex. 7 | 43.2 | 31 | 1036 | 0.81 | 347.43 |
| Comp. Ex. 5 | 0 | 33 | 1157 | - | 186.39 |

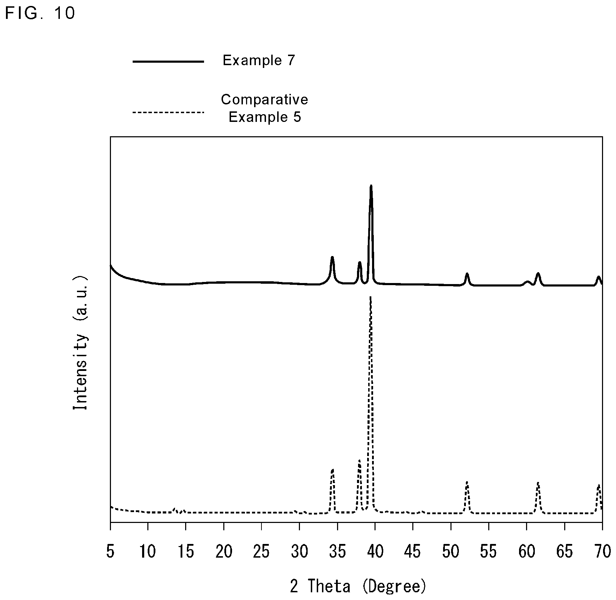

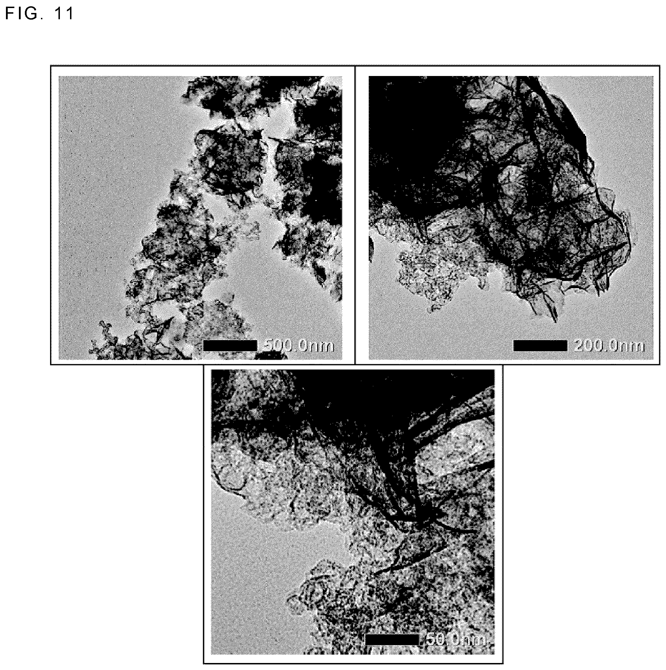

The result of the XRD analysis is illustrated in FIG. 10. FIG. 11 illustrates the observed images of the particles in Example 7 obtained by using a transmission electron microscope (TEM). The results illustrated in FIG. 11 confirmed the generation of Ni(OH)₂ nanosheets on the surface of the molybdenum carbide compared to the TEM photograph of the molybdenum carbide in FIG. 3.

### [Preparation of Catalyst Ink and Evaluation of Oxygen Generation Catalyst]

4 mg of either nickel hydroxide-molybdenum carbide composite products 1 in Example 7 or commercially available molybdenum carbide in Comparative Example 8, 2 mg of Ketjen Black, and 40ul of 5% Nafion dispersion solution (Nafiondispersionsolution manufactured by Fujifilm Wako Pure Chemicals Corporation) were dispersed in 1 ml of ethanol by sonication for 1 hour to form an ink. 20 ul of the obtained ink was applied to electrode surfaces and the liquid on the surface was dried naturally. Then, the electrodes were transferred to a vacuum dryer and dried at 60°C for 6 hours or more. The hydrogen evolution activity of the prepared electrode was evaluated using a three-electrode method. The electrolyte was 1.0 Mol/L potassium hydroxide solution (Potassiumhydroxidesolution manufactured by Kanto Chemical Co.). As the evaluation conditions, a LSV method was used and a scan voltage range was 1.0 V to 1.8 V at a scanning speed of 5 mV/S. Overvoltages (mV) at a current density of 10 mA/cm² and the current densities (mA/cm²) at a voltage of 1.8 V are listed in Table 9.

**[Table 9]**

| | Overvoltage (mV) | Current density (mA/cm²) |
|---|---|---|
| Ex. 7 | 335 | 104.3 |
| Comp. Ex. 5 | 392 | 66.4 |

Each constitution and the combinations thereof in each embodiment are examples, and additions, omissions, replacement, and other changes to the constitution are possible to the extent that the change do not deviate from the purpose of the present invention. The present invention is not limited by each embodiment, but limited only by the scope of the claims.

## Claims

1. Molybdenum carbide comprising a Mo₂C crystal structure, wherein a content of carbon with respect to a total mass (100 mass%) of the molybdenum carbide is 6% or more.

2. The molybdenum carbide according to claim 1, wherein a graphite band G and a diamond band D derived from carbon measured by Raman spectroscopy are present.

3. The molybdenum carbide according to claim 2, wherein a ratio (G/D) of the graphite band G to the diamond band D derived from carbon is 0.75 or more.

4. The molybdenum carbide according to claim 1, wherein a specific surface area measured by a BET method is 10 m²/g to 2,000 m²/g.

5. The molybdenum carbide according to claim 1, wherein a median diameter D₅₀ calculated by being calculated by a dynamic light scattering method is 1,000 nm or less.

6. The molybdenum carbide according to claim 1, wherein an average crystallite size determined from a peak at 2θ = 39.4 ± 0.5° of a profile obtained by X-ray diffraction measurement is 50 nm or less.

7. A catalyst ink comprising:
the molybdenum carbide according to claim 1; and
a solvent.

8. A composite product of noble metal particles having an average particle diameter of 20 nm or less and the molybdenum carbide according to claim 1.

9. The composite product according to claim 8, wherein the noble metal particles are palladium particles.

10. The composite product according to claim 9, wherein the palladium particles comprise aggregates of palladium atoms without having a crystal structure.

11. A catalyst ink comprising:
the composite product according to claim 8; and
a solvent.

12. A composite product of at least one transition metal spices selected from the group consisting of transition metals and transition metal compounds and the molybdenum carbide according to claim 1.

13. The composite product according to claim 12 with the molybdenum carbide, wherein the transition metal spices is at least one transition metal spices selected from the group consisting of nickel and nickel compounds.

14. A catalyst ink comprising:
the composite product according to claim 12; and
a solvent.

15. A method for producing molybdenum carbide, the method comprising: a step of calcining molybdenum trioxide containing an α crystal having an average crystallite size of 50 nm or less and carbon in presence of at least one inorganic compound selected from the group consisting of inorganic salts and inorganic hydroxides.

16. The method for producing molybdenum carbide according to claim 15, wherein the inorganic compound is at least one compound selected from the group consisting of sodium compounds and potassium compounds.

17. A method for producing a composite product, the method comprising a step of mixing molybdenum carbide and a noble metal solution, wherein
the molybdenum carbide has a Mo₂C crystal structure and a content of carbon with respect to a total mass (100 mass%) of molybdenum carbide is 6% or more.

18. A method for producing a composite product, the method comprising a step of mixing molybdenum carbide and a transition metal compound solution, wherein
the molybdenum carbide has a Mo₂C crystal structure and a content of carbon with respect to a total mass (100 mass%) of molybdenum carbide is 6% or more.
